# EUROPÄISCHE PATENTSCHRIFT

(11) **EP 0 598 074 B1**
(45) Veröffentlichungstag und Bekanntmachung des Hinweises auf die Patenterteilung: **14.10.1998**
(21) Anmeldenummer: 93906420.0
(22) Anmeldetag: 31.03.1993
(51) Int. Cl.: B62L 3/02, B62L 1/00, F16D 55/224

(54) **HYDRAULISCHE FAHRRADBREMSE**
HYDRAULIC BICYCLE BRAKE
FREIN HYDRAULIQUE DE BICYCLETTE

(30) Priorität: 14.04.1992 CH 1222/92
(43) Veröffentlichungstag der Anmeldung: 25.05.1994
(60) Teilanmeldung: 97115695.5
(73) Patentinhaber: Süle, Sandor, CH-8240 Thayngen (CH)
(72) Erfinder: Süle, Sandor, CH-8240 Thayngen (CH)
(74) Vertreter: Weiss, Peter, Dr. rer. nat.
(86) Internationale Anmeldenummer: CH9300088
(87) Internationale Veröffentlichungsnummer: WO9321057

(56) Entgegenhaltungen:
- EP-A- 0 285 958
- GB-A- 745 061
- US-A- 3 899 057
- US-A- 4 391 353

## Beschreibung

Die Erfindung betrifft eine Fahrradbremse mit wenigstens einem, mit einem Handgriff verbundenen Geberzylinder und zumindest einem daran durch eine Bremsleitung angeschlossenen Bremszylinder, wobei die Bremsleitung beidends in einen volumenveränderlichen Raum mündet und der im Geberzylinder vorgesehene Raum durch ein vom Handgriff betätigbares Organ gegen einen Kraftspeicher verkleinerbar ist.

Solche Fahrradbremse sind z.B. aus den GB-A-745061, EP-A-0 285 958, US-A-3 899 057 sowie US-A-4 391 353 bekannt.

Zwei einander gegenüberliegende Bremszylinder drücken bei Betätigung des Geberzylinders z.B., wobei im Geberzylinder Flüssigkeit herausgedrückt und in die Bremszylinder eingedrückt wird, die Kolben mit den an der Kolbenstange befestigten Bremsschuhen in Richtung der Felgenwand des Rades. Beim Andruck beider Bremsschuhe entsteht ein statischer Druckaufbau im Geber- bezw. Bremszylinder, der auf der Felge über die Bremsschuhe in Kraft und Reibung umgesetzt wird.

Durch Nachlassen der Handkraft bzw. Loslassen des Handgriffes drückt z.B. die Feder, die als Kraftspeicher im Geberzylinder sitzt, den Kolben in seine Ausgangsstellung. Der dadurch entstehende Unterdruck führt die Flüssigkeit in den Geberzylinder zurück und lässt die Bremsschuhe ebenfalls in ihre Ausgangsstellungen fahren, wobei auch keine übertragbare Bremskraft mehr im System steckt.

Aufgabe der vorliegenden Erfindung ist die Entwicklung einer Fahrradbremse mit geringer Wartung und optimalen Bremsverhältnissen, die mit einem geschlossenen und damit leckagefreien Flüssigkeitsdrucksystem operiert.

Zur Lösung dieser Aufgabe führt, dass in jeden Zylinder ein geschlossener Hohlkörper angeordnet ist, der aus einem Mantel aus elastischem Werkstoff besteht, auf der einen Seite an einem Kolben und auf der anderen Seite an einem Führungsflansch leckagefrei befestigt ist, wobei ein Druckbolzen, der mittels dem Flansch geführt wird, fest am Kolbenboden aufliegt, ohne dass der Druckbolzen axial mit der elastischen Ummantelung in Berührung kommt.

Der Anspruch 1 definiert eine Fahrradbremse gemäß der Erfindung.

Damit der Kolben die maximale Kraft auf die Felgen geben kann und das System leckagefrei bleibt, hat sich der Erfinder für einen bevorzugten Hohlkörper entschlossen, der aus einem elastischen, gut verformbaren Material im Zylinder-Ringbereich als Ummantelung und im Stirnflächen- bzw. Bodenbereich aus einem festen bzw. schwer verformbaren Material besteht. Diese zwei total unterschiedlichen Materialien werden, je nach Gebrauch als Geber- oder Bremszylinder, so an ihren Uebergangsstellen ausgeformt und miteinander verbunden, dass sie hydraulisch undurchlässig sind.

Im Gegensatz zu einer herkömmlichen, topfartigen Membrandichtung, wo die Kräfte sowie der Innendruck auf den elastischen Werkstoff im Ring und Bodenbereich auftreffen, sind hier die maximal auftretenden Kräfte in axialer Richtung auf den harten, festen Werkstoff gelegt; d.h., es entstehen im Uebergang von Boden-/Mantelbereich kaum Querkräfte oder Biegemomente im elastischen Werkstoff, was die Haltbarkeit und Lebensdauer gegenüber herkömmlichen, topfartigen Membrandichtungen verbessert.

Die auf dem Kolbenboden, insbesondere im Zentrum des Kolbenbodens auftretenden maximalen Spannungen sind hier gegenüber der topfartigen Membrandichtung ebenfalls unerheblich, da sich hier kein weicher bzw. elastischer Werkstoff befindet, der hier zwischen dem auftretenden Flüssigkeitsdruck und einem festen, harten Kolben zerdrückt wird und einreissen kann.

Diese beschriebenen Belastungen bei einer herkömmlichen, topfartigen Membrandichtung, die einen bestimmten Weg in axialer Richtung zurücklegt, ohne dass sie abrollen kann, lassen sich vergleichen mit den Belastungen, die beim Tiefziehen von Stahl oder Aluminium auftreten.

Beim Geberzylinder sind die beiden stirnseitigen Ringflächen des elastischen Mantels hydraulisch dicht verbunden mit dem Boden des Führungsflansches und dem Kolbenrücken des Geberkolbens. Wird die direkt mit dem Kolben verbundene Kolbenstange - wobei der Aussendurchmesser der Kolbenstange gleich gross ist wie der Innendurchmesser des Hohlkörpers - in Richtung des Zylinderbodens geschoben, wobei der Zylinderboden eine Oeffnung hat, die mit einer Flüssigkeitsleitung verbunden ist, entsteht eine Volumenverkleinerung im Geberzylinder sowie ein statischer Druckanstieg. Der elastische Mantel wird durch die Verbindung an dem Führungsflanschboden und dem Kolbenrücken durch die axial gerichtete Verschiebung auseinandergedehnt, und der im Zylinder entstehende Oeldruck drückt den inneren Ringdurchmesser des elastischen Mantels gegen den Aussendurchmesser der Kolbenstange.

Das im Geberzylinder verdrängte Oel fliesst durch die Flüssigkeitsleitung in den Bremszylinder.

Beim Bremszylinder sind die beiden stirnseitigen Ringflächen des elastischen Mantels jeweils hydraulisch dicht mit dem Kolbenboden und dem Zylinderboden verbunden, wobei der Zylinderboden eine Oeffnung hat, die mit der Flüssigkeitsleitung verbunden ist.

Das einfliessende Oel drückt bei der Beaufschlagung auf den Kolbenboden den Kolben, an dessen Kolbenstange im vorderen Bereich ein Bremsschuh befestigt ist, in axialer Richtung nach vorne auf eine Felgenwand oder anderen Bremskörper, wie z.B. eine Bremsscheibe.

Durch diese Volumenvergrösserung und den nach der Beaufschlagung des Bremsklotzes an der Felge entstehenden statischen Druckanstieg wird der elastische Mantel in axialer Richtung ausgedehnt und der äussere Durchmesser an die innere Zylinderwand gedrückt.

Um eine möglichst grosse Lebensdauer des elastischen Mantels zu gewährleisten, ist die Kolbenstange des Geberzylinders und der Innendurchmesser des Bremszylinders vorzugsweise mit einem gleitfähigen Material eingestrichen und nach aussen mittels eines Abstreifers oder eines anderen Dichtelementes gegen Schmutz, Staub und Feuchtigkeit geschützt, so dass die Reibung, die beim Anliegen und Ausdehnen des elastischen Mantels auf der Kolbenstange bzw. dem Innendurchmesser des Bremszylinders entsteht, möglichst gering gehalten wird.

Diese erfinderische Gestaltung des Hohlkörpers ermöglicht den Einsatz für Felgen- und Scheibenbremsen. Bei der Scheibenbremse wählte der Erfinder die Ausführung als Schwimmsattelbremse.

Bei der Schwimmsattelbremse wird ein Kugelgelenk mit angesetztem Rohrstück verwendet. Diese Ausführung übernimmt mit dem Bremszylinder gleichzeitig die Aufgabe des Führungsbolzens, wobei der Aussendurchmesser des Rohrstückes etwas kleiner ist als der des Kugelgelenks, so dass sich das Aussehen eines Kugelzapfens ergibt.

Durch diesen speziellen Gelenkkopf fährt eine durchgehende Bohrung von der Stirnseite des Rohrstückes bis zum Durchbruch der Kugel, der in seinem Durchmesser so gross ist, dass er den runden Scheibenbremszylinder aufnehmen kann und ein minimaler Luftspalt vorhanden ist, so dass der Bremszylinder sich oszillierend darin bewegen kann. In dem Kreisring des Rohrstückes ist in axialer Richtung zur Bohrung ein Längsschnitt eingearbeitet. Dieser Schlitz nimmt einen Zapfen auf, der senkrecht am Bremszylinder angebracht ist und als Verdrehsicherung dient. Der Schlitz hat im Minimum die Länge der maximalen oszillierenden Bewegung des Bremszylinders inkl. der Zapfenbreite bzw. des Zapfendurchmessers.

Weitere Vorteile, Merkmale und Einzelheiten der Erfindung ergeben sich aus den nachfolgenden Beschreibungen sowie anhand der Zeichnungen. Diese zeigen in:

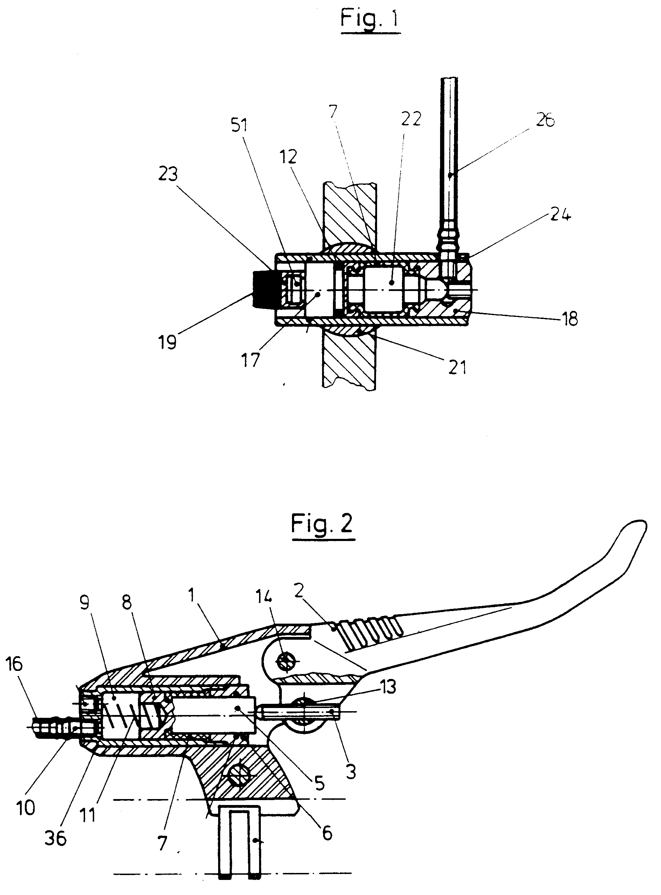

Fig. 1: Detail des Bremszylinders im Längsschnitt
Fig. 2: Detail des Geberzylinders im Längsschnitt

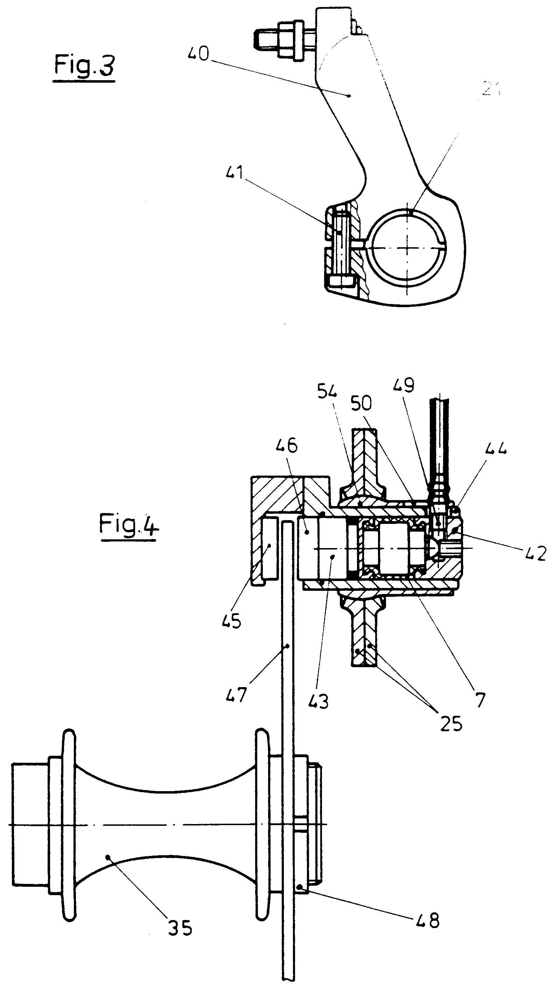

Fig. 3: Seitenansicht des U-Trägers mit geschnittener Ansicht der Klemmöglichkeit
Fig. 4: Draufsicht der geschnittenen Darstellung der Scheibenbremse

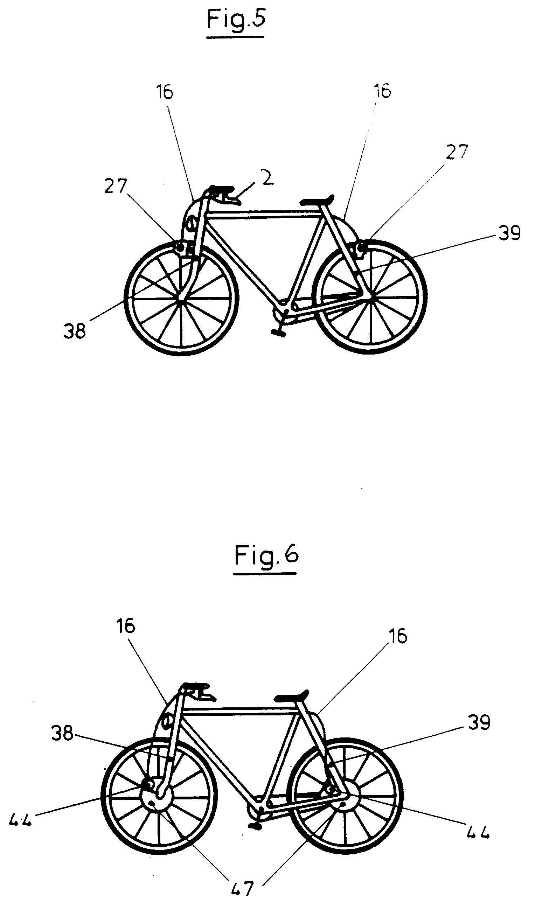

Fig. 5: Skizzenhafte Ansicht eines Fahrrades mit angebrachten Felgenbremsen
Fig. 6: Skizzenhafte Ansicht eines Fahrrades mit angebrachten Scheibenbremsen.

Eine Fahrradbremse für ein in Fig. 7 und Fig. 8 skizziertes Fahrrad besteht aus einem Geberzylinder (1) mit Handhebel (2) und einer vom Geberzylinder ausgehenden Bremsleitung (16), die direkt den Bremszylinder (44), der auf die Bremsscheibe (47) wirkt, oder, in Verbindung mit einem Y-Verteilerstück, an das zwei weitere Bremsleitungen (26) angeschlossen sind, zwei Bremszylinder (24) mit Bremsflüssigkeit versorgt. Die Bremszylinder (24) sind mittels eines Halters an dem Fahrrad befestigt. Der Kalter wird mit einer Schraube und Mutter am Gabelkopf bzw. an einer Stegplatte befestigt.

Zur genauen Anpassung der Bremsschuhe (19) an den Felgenrand, wobei die Bremse wie ein Boxersystem funktioniert, kann der Bremszylinder (24) durch ein in einem Träger (27) liegendes geschlitztes Kugelgelenk (21) durch kegelförmiges Schwenken und oszillierende Bewegungen genau an den Felgenrand und -abstand eingestellt werden. Ist der Bremsschuh (19) angepasst, wird der Bremszylinder (24) durch die klemmende Wirkung des geschlitzten Kugelgelenks (21), das durch Anziehen einer Schraube (41) erreicht wird, arretiert.

Durch Drehen des Handhebels (2) um ein Gelenk (14) wird ein Gewindestift (3), der über ein Gelenk (13) schwenkbar gelagert ist, gegen einen Druckbolzen bzw. eine Kolbenstange (5) gedrückt, wobei diese, geführt durch einen Flansch (6), einen Scheibenkolben (8) gegen einen Kraftspeicher (11) nach vorn in Richtung des Zylinderbodens drückt und die Flüssigkeit aus einem Zylinderraum (9) über einen Schlauchstutzen (10) und die Bremsleitung (16) direkt über einen nicht näher beschriebenen Y-Verteiler, der die Flüssigkeitsmenge aufteilt, in einen Innenraum (22) der beiden links und rechts angebrachten Bremszylinder (24) zuführt, wobei die Menge der zugeführten Flüssigkeit in Abhängigkeit des zurückzulegenden Weges der Bremsschuhe (19) liegt und die Aufteilung der Flüssigkeitsmenge zu den beiden Bremszylindern (24) nach den physikalischen Gesetzen der Hydraulik erfolgt.

Die in den Innenraum (22) einströmende Flüssigkeit druckt einen Scheibenkolben (17) nach vorne, wobei sich ein elastische Mantel (7) verlängert und im Ringbereich gegen die Zylinderwand des Bremszylinders (24) drückt, bis der Bremsschuh an der Felgenwand zum Aufliegen kommt. Jedes weitere Drücken der Hand am Handhebel (2) erhöht danach den statischen Druck auf den Scheibenkolben (17) und somit auf den Bremsschuh.

Dieses beschriebene, leckagefreie System ist selbstverständlich ebenso anwendbar auf die Scheibenbremse. Dabei wird die Flüssigkeit aus dem Zylinderraum (9) des Geberzylinders über den Schlauchstutzen (10) und die Bremsleitung (16) herausgedrückt und direkt in den Innenraum des Bremszylinders (44) der Scheibenbremse hineingedrückt. Hier erfolgt nun der von der Schwimmsattelbremse bekannte Bremsvorgang. Dabei kommen die Bremsbacken (45) durch die Bewegung des in axialer Richtung beweglich in ein Kugelgelenk (54) eingesetzten Bremszylinders (44) oder durch den Kolben (43) die Bremsbacke (46) zum Anliegen an die Bremsscheibe (47).

Dabei hat das Kugelgelenk (54) folgende Aufgabenbereiche. Der eine Aufgabenbereich liegt in der Fertigungsfreundlichkeit für die Anbringung der Scheibenbremse. Die am Gabelrohr (38, 39) angebrachte Halterung zur Aufnahme der Bremszylindereinheit muss nicht besonders parallel zur Bremsscheibe angelötet oder angeschweisst werden, da durch die kegelförmige Schwenkbarkeit des Kugelgelenkes in der geteilten Kugelpfanne (25) die Parallelität der Bremsbeläge zur Bremsscheibe eingestellt werden kann. Diese geteilte Kugelpfanne (25) wird nach der Parallelstellung Scheibe - Bremsbelag z.B. durch Schrauben zusammengezogen und verklemmt dabei das Kugelgelenk (54), das damit fest mit dem Fahrradrahmen verbunden ist.

Weitere Aufgabenbereiche sind, dass die axiale Bohrung im Kugelgelenk (54) gleichzeitig als Führung für den schwimmend eingehängten Bremszylinder (44) dient, dabei wird der im Rohransatz befindliche Schlitz (50), das Kugelgelenk (54) mit dem Führungsschlauchstutzen (49) als Verdrehsicherung für den Scheibenbremszylinder (44) benutzt.

Zur Befestigung der Bremsscheibe (47) auf der Nabe (35) wird an der einen Nabenseite ein Gewinde eingeschnitten, wie es bei Hinterradnaben zur Befestigung von Leerlaufzahnkränzen bereits bekannt ist. Dabei muss ein Absatz vor dem Speichenflansch übrigbleiben, und im aufgeschnittenen Gewinde müssen Keilnuten oder Zahnbahnen eingearbeitet sein.

Das Zentrum der Bremsscheibe (47) ist so ausgestaltet, dass die Bremsscheibe (47) mit den eingearbeiteten oder eingesetzten Keilen über das Gewinde der Nabe (35) gezogen werden kann und die Bremsscheibe (47) mittels einer Mutter (48) auf der Nabe (35) gesichert wird.

Diese Gestaltung der Befestigung der Bremsscheibe (47) lässt es zu, dass fast alle herkömmlichen Vorder- und Hinterradnaben durch ein paar Fertigungsoperationen mehr mit der Bremsscheibe (47) ausgerüstet werden können.

## Patentansprüche

1. Fahrradbremse mit wenigstens einem, mit einem Handgriff (2) verbundenen Geberzylinder (1) und zumindest einem daran durch eine Bremsleitung (16, 26) angeschlossenen Bremszylinder (24, 44), wobei die Bremsleitung (16, 26) beidends in einen volumenveränderlichen Raum (9, 22) mündet und der im Geberzylinder (1) vorgesehene Raum (9) durch ein vom Handgriff (2) betätigbares Organ (3) gegen einen Kraftspeicher (11) verkleinerbar ist,
dadurch gekennzeichnet durch, daß in jeden Zylinder
ein geschlossenen Hohlkörper angeordnet ist, der aus einem Mantel (7) aus elastischem Werkstoff besteht, der auf der einen Seite an einem Kolben (8) und auf der anderen Seite an einem Führungsflansch (6) leckagefrei befestigt ist, wobei ein Druckbolzen (5), der mittels dem Flansch (6) geführt wird, fest am Kolbenboden aufliegt, ohne dass der Druckbolzen (5) axial mit der elastischen Ummantelung in Berührung kommt (Fig. 2).

2. Fahrradbremse nach Anspruch 1, dadurch gekennzeichnet, dass zur Positionierung des Handgriffes (2) mit dem Kolben (8) ein Gewindestift (3), der mittels Gelenk (13) drehbar gelagert ist, im Handgriff (2) an den Druckbolzen (5) andrückt (Fig. 2).

3. Fahrradbremse nach Anspruch 1, dadurch gekennzeichnet, dass der Innenraum (22) des im Bremszylinder (24) befindlichen und geschlossenen Hohlkörpers, bestehend aus dem aus elastischem Werkstoff bestehenden Mantel (7), der auf einer Seite mit einem Bremskolben (17) und auf der anderen Seite mit einem Einlassflansch (18) leckagefrei befestigt ist, an dem die Bremsleitung (26) durch die statische Flüssigkeitsdruckübertragung mit Bremskraft auf die Bremsschuhe (19) überträgt (Fig. 1).

4. Fahrradbremse nach Anspruch 3, dadurch gekennzeichnet, dass die Bremskolben (17) bei der Aufnahme des Bremsschuhs (19) so ausgebildet sind, dass in Teilbereichen des Umfanges (51) des Bremskolbens (17) widerhakenartig der Bremsschuh (19) einschnappen kann und die auftretenden axialen Kräfte an der Stirnfläche (23) aufgenommen werden, während die auftretenden radialen Kräfte am nicht eingehakten Teil des Kolbenumfanges (51) aufgefangen werden (Fig. 1).

5. Fahrradbremse nach einem der Ansprüche 1 bis 3, dadurch gekennzeichnet, dass die Bremskolben (17, 43) mit Umfangsnut ausgebildet sind, um einen Dichtungsring (12) aufzunehmen (Fig. 1 und 6).

6. Fahrradbremse nach Anspruch 1, dadurch gekennzeichnet, dass sich zwischen Kolben (8) und der Stirnfläche des Zylindergehäuses (36) eine Druckfeder (11) als Kraftspeicher erstreckt (Fig. 2).

7. Fahrradbremse nach Anspruch 3, dadurch gekennzeichnet, dass die Bremszylinder (24) in einem in axialer Richtung geschlitzten Kugelgelenk (21) liegen, wodurch die Bremszylinder (24) kegelförmig schwenkbar, axial verschiebbar und je nach Abnützungsgrad der Bremsschuhe (19) bzw. Form und Lage der Felge (37) einstellbar sind, wobei die Arretierung und Klemmung der Bremszylinder mit dem geschlitzten Kugelgelenk (21) mittels einer Schraube erfolgt.

8. Fahrradbremse nach einem der Ansprüche 1 - 7, dadurch gekennzeichnet, dass das in axialer Richtung geschlitzte Kugelgelenk (21) in einem U-förmigen Halter (40) lagert (Fig. 3).

9. Fahrradbremse nach einem der Ansprüche 1 bis 6, dadurch gekennzeichnet, dass der geschlossene Hohlkörper bzw. der aus elastischem Werkstoff bestehende Mantel (7) auf einer Seite mit einem Bremskolben (43) und auf der anderen Seite mit einem Einlassflansch (42) leckagefrei befestigt ist und in dem Bremszylinder (44) lagert, der für eine Scheibenbremse als Schwimmsattelbremse ausgebildet ist (Fig. 4).

10. Fahrradbremse nach Anspruch 9, dadurch gekennzeichnet, dass der schwimmend eingehängte Bremszylinder (44) gegen Verdrehung durch einen Führungsschlitz (50) im Rohransatz eines Kugelgelenkes (54) gesichert ist, in dem ein am Bremszylinder (44) befestigter Zapfen läuft (Fig. 4).

11. Fahrradbremse nach den Ansprüchen 9 und 10, dadurch gekennzeichnet, dass das Kugelgelenk (54) mit Rohransatz kegelfömig schwenk- und einstellbar in zwei Ebenen geklemmt werden kann, ohne dass die schwimmende Bewegung des Bremszylinders (44) beeinträchtigt wird (Fig. 4).

12. Fahrradbremse nach den Ansprüchen 9 bis 11, dadurch gekennzeichnet, dass eine Bremsscheibe (47) durch Keile oder andere zahnförmige Ausarbeitungen auf eine Nabe (35) gegen Verdrehung und mittels einer Mutter (48) gegen Herausfallen gesichert ist (Fig. 4).

## Claims

1. Bicycle brake, having at least one master cylinder (1) connected to a hand grip (2) and at least one brake cylinder (24, 44) connected thereto by a brake lead (16, 26), the brake lead (16, 26) terminating at both ends in a space (9, 22) of variable volume, and the space (9) provided in the master cylinder (1) being reducible towards an energy storing device (11) by means of a component (3) which is actuatable by the hand grip (2), characterised in that a closed hollow body, which consists of a casing (7) formed from resilient material, is disposed in each cylinder, said hollow body being secured, in a leak-free manner, to a piston (8) on one side and to a guide flange (6) on the other side, a compression pin (5), which is guided by means of the flange (6), resting firmly on the piston base without the compression pin (5) coming into contact axially with the resilient covering (Fig. 2).

2. Bicycle brake according to claim 1, characterised in that, in order to position the hand grip (2) with the piston (8), a threaded pin (3), which is rotatably mounted by means of pivot joint (13), presses against the compression pin (5) in the hand grip (2) (Fig. 2).

3. Bicycle brake according to claim 1, characterised in that the interior (22) of the closed hollow body, which is situated in the brake cylinder (24) and consists of the casing (7) formed from resilient material and secured, in a leak-free manner, to a brake piston (17) on one side and to an inlet flange (18) on the other side, at which flange the brake lead (26) transfers braking power to the brake shoes (19) as a result of a transfer of static fluid pressure (Fig. 1).

4. Bicycle brake according to claim 3, characterised in that, for the accommodation of the brake shoe (19), the brake pistons (17) are so configured that the brake shoe (19) can snap in position in partial regions of the circumference (51) of the brake piston (17) in a barb-like manner, and the axial forces occurring at the end face (23) are absorbed, while the radial forces occurring at the non-hooked-in portion of the piston circumference (51) are intercepted (Fig. 1).

5. Bicycle brake according to one of claims 1 to 3, characterised in that the brake pistons (17, 43) are provided with a circumferential groove in order to accommodate a sealing ring (12) (Figs. 1 and 4).

6. Bicycle brake according to claim 1, characterised in that a compression spring (11) extends as an energy storing device between piston (8) and the end face of the cylinder housing (36) (Fig. 2).

7. Bicycle brake according to claim 3, characterised in that the brake cylinders (24) lie in a ball joint (21) which is slotted in the axial direction,
whereby the brake cylinders (24) are conically pivotable, axially displaceable and adjustable depending on the degree of wear of the brake shoes (19), or respectively the shape and position of the rim, the locking and clamping of the brake cylinders to the slotted ball joint (21) being achieved by means of a screw.

8. Bicycle brake according to one of claims 1 - 7. characterised in that the ball joint (21), which is slotted in the axial direction, is mounted in a U-shaped holder 40 (Fig.3).

9. Bicycle brake according to one of claims 1 to 6, characterised in that the closed hollow body, or respectively the casing (7) formed from resilient material, is secured, in a leak-free manner, to a brake cylinder (43) on one side and to an inlet flange (42) on the other side, and mounted in the brake cylinder (44), which is configured as a floating calliper brake for a disc brake (Fig. 4).

10. Bicycle brake according to claim 9, characterised in that the detachably retained brake cylinder (44) is prevented from rotating by a guide slot (50) in the tubular attachment of a ball joint (54), in which a journal, secured to the brake cylinder (44), extends (Fig. 4).

11. Bicycle brake according to claims 9 and 10, characterised in that the ball joint (54), with the tubular attachment, can be clamped so as to conically pivotable and adjustable in two planes without the floating movement of the brake cylinder (44) being impaired (Fig. 4).

12. Bicycle brake according to claims 9 to 11, characterised in that a brake disc (47) is prevented from rotating by wedges or other tooth-shaped extensions on a hub (35) and is prevented from falling out by means of a nut (48) (Fig. 4).

## Revendications

1. Frein de bicyclette comportant au moins un cylindre générateur (1) relié à une poignée (2) et au moins un cylindre de frein (24, 44) relié par une conduite de frein (16, 26), cette conduite de frein (16, 26) débouchant aux deux extrémités dans une chambre (9, 22) de volume variable, et la chambre (9) prévue dans le cylindre générateur (1) est susceptible d'être diminuée par un organe (3) actionné par une poignée (2) , contre l'action d'un accumulateur de force (11),
caractérisé en ce que
un corps creux, fermé, est logé dans chaque cylindre, ce corps se composant d'une enveloppe (7) en matière élastique, fixée d'un côté contre un piston (8) et de l'autre côté contre une bride de guidage (6), d'une manière étanche, un goujon de pression (5) guidé par la bride (6), s'appliquant solidement contre le fond du piston sans que ce goujon de pression (5) arrive en contact axial avec l'enveloppe élastique (figure 2).

2. Frein de bicyclette selon la revendication 1,
caractérisé en ce qu'
une tige filetée (3) est montée à rotation dans une articulation (13) pour positionner la poignée (2) avec le piston (8), et cette tige s'appuie dans la poignée (2) contre le goujon de pression (5) (figure 2).

3. Frein de bicyclette selon la revendication 1,
caractérisé en ce que
le volume intérieur (22) du corps creux (composé d'une enveloppe (7) en matière élastique) se trouvant emprisonné dans le cylindre de frein (24), et qui est fixé d'un côté au piston de frein (17) et de l'autre côté à une bride d'entrée (18), de manière étanche, reçoit par la conduite de frein (26), par transmission de pression de liquide, statique, la force de frein vers le patin de frein (19) (figure 1).

4. Frein de bicyclette selon la revendication 3,
caractérisé en ce que
le piston de frein (17) est réalisé pour recevoir le patin de frein (19), dans les zones partielles de la périphérie (51) du piston de frein (17) le patin de frein (19) peut s'accrocher avec un effet de harpon et les efforts axiaux produits sont absorbés par la surface frontale (23) alors que les efforts radiaux engendrés sont reçus sur la partie non accrochée de la périphérie du piston (51) (figure 1).

5. Frein de bicyclette selon l'une des revendications 1 à 3,
caractérisé en ce que
les pistons de frein (17, 43) comportent une rainure périphérique pour recevoir un joint d'étanchéité (12) (figures 1 et 4).

6. Frein de bicyclette selon la revendication 1,
caractérisé par
un ressort de compression (11) fonctionnant comme accumulateur de force entre le piston (8) et la surface frontale du boîtier de cylindre (36) (figure 2).

7. Frein de bicyclette selon la revendication 3,
caractérisé en ce que
les freins de cylindres (24) sont situés dans une articulation à rotule (21) fendue en direction axiale, pour que le cylindre de frein (24) puisse pivoter suivant une forme de cône et coulisser axialement, et selon le degré d'usure du patin de frein (19) ou de la forme et de la position de la jante, on puisse les régler, le blocage et le serrage des cylindres de frein ont lieu par une vis grâce à l'articulation à rotule (21) fendue.

8. Frein de bicyclette selon l'une des revendications 1 à 7,
caractérisé en ce que
l'articulation à rotule (21), fendue dans la direction axiale, est montée dans un support (40) en forme de U (figure 3).

9. Frein de bicyclette selon l'une des revendications 1 à 6,
caractérisé en ce que
le corps creux fermé ou l'enveloppe (7) en matière élastique, est fixé d'un côté par un piston de frein (43) et de l'autre côté par une bride d'entrée (42), de manière étanche et est logé dans le cylindre de frein (44), conçu pour un frein à disque comme frein à étrier flottant (figure 4).

10. Frein de bicyclette selon la revendication 9,
caractérisé en ce que
le cylindre de frein (44) accroché de manière flottante, est bloqué en rotation par une fente de guidage (50) dans le prolongement tubulaire d'une articulation à rotule (54), dans lequel passe un téton fixé au cylindre de frein (44) (figure 4).

11. Frein de bicyclette selon l'une quelconque des revendications 9 et 10,
caractérisé en ce que
l'articulation à rotule (54) peut pivoter et se régler avec un prolongement tubulaire de forme conique, en étant pincée dans deux plans sans que le mouvement flottant du cylindre de frein (44) ne soit détérioré (figure 4).

12. Frein de bicyclette selon les revendications 9 à 11,
caractérisé en ce qu'
un frein à disque (47) est fixé par des coins ou autre réalisation de forme dentée sur un moyeu (35) le bloquant en rotation et verrouillé à l'aide d'un écrou (48) pour ne pas tomber (figure 4).
